# EUROPÄISCHE PATENTSCHRIFT

(11) **EP 1 134 478 B1**
(45) Veröffentlichungstag und Bekanntmachung des Hinweises auf die Patenterteilung: **19.04.2006**
(21) Anmeldenummer: 01103029.3
(22) Anmeldetag: 09.02.2001
(51) Int. Cl.: F16L 59/02

(54) **Isoliervorrichtung**
Insulation device
Dispositif d'isolation

(30) Priorität: 26.02.2000 DE 10009160
(43) Veröffentlichungstag der Anmeldung: 19.09.2001
(73) Patentinhaber: Thermamax Hochtemperaturdämmungen GmbH, 68169 Mannheim (DE)
(72) Erfinder: Becker, Michael, 67366 Weingarten (DE)
(74) Vertreter: Schmitt, Meinrad

(56) Entgegenhaltungen:
- EP-A- 0 706 005
- DE-C- 748 136
- DE-U- 8 307 690
- US-A- 3 818 949
- US-A- 4 584 217
- US-A- 4 823 845

## Beschreibung

Die Erfindung bezieht sich auf eine tsoliervorrichtung, insbesondere für von heißen Medien durchströmbare Körper, gemäß der im Oberbegriff des Patentanspruchs 1 angegebenen Merkmale.

Aus der US-A-4 832 845 ist eine derartige Isoliervorrichtung bekannt, welche einen flexiblen Innenmantel und einen flexiblen Außenmantel sowie zwischen diesen angeordnetes Isoliermaterial enthält. Das Isoliermaterial ist mit dem Innenmantel und dem Außenmantel über den gesamten Umfang mittels Klebeschichten fest verbunden. Die Isoliervorrichtung ist als eine Baueinheit mit zwei einander zugeordneten Längskanten ausgebildet und wird zur Montage auf einen Körper derart aufgespreizt, dass die Längskanten einen dem Außendurchmesser des Körpers entsprechenden Abstand zueinander aufweisen und somit die Isoliervorrichtung auf den Körper aufgeschoben werden kann, wobei nachfolgend die Längskanten wieder zur gegenseitigen Anlage gebracht werden. Da beim Aufspreizen der Isoliervorrichtung die Abstände zwischen dem Innenmantel und dem Außenmantel vergrößert werden, können nicht unerhebliche Belastungen des mit dem Innenmantel und Außenmantel fest verbundenen Isoliermaterials auftreten, wobei ein Aufreißen oder Abreißen des Isoliermaterials, Gefügeveränderungen oder dergleichen zu befürchten sind. Es kommt hinzu, dass während des Einsatzes der Isoliervorrichtung, beispielsweise aufgrund hoher einwirkender Temperaturen oder Vibrationen, Schädigungen des Isoüermaterials auftreten können, so dass infolge reduzierter Isolierwirkung eine Erneuerung erforderlich wird. Ein Austausch allein des Isoliermaterials ist aufgrund der Klebeverbindung mit dem Innenmantel und dem Außenmantel nicht ohne weiteres möglich.

Ferner ist aus der DE-A-748 136 eine Isoliervorrichtung mit einer Außenblechverkleidung und einem Innendrahtgeflecht bekannt. Die Außenblechverkleidung enthält dachziegelartig sich überlagernde Bleche, welche an der Innenseite als nach innen gekröpfte Laschen ausgebildete Anschläge aufweisen. Ferner sind mit der Innenseite der Außenblechverkleidung Abstandsglieder fest verbunden, mittels welchen das innenliegende Drahtgeflecht und das von diesem gehaltene Isoliermaterial gehalten wird. Die Abstandsglieder durchdringen das Isoliermaterial und liegen zur Abstützung der lsoliervorrichtung außen an einer Behälterwand oder dergleichen an.

Des Weiteren ist aus der DE-A-35 21 467 ist eine derartige Isoliervorrichtung oder wärmedämmende Ummantelung eines Rohres zur Leitung von Heißgasen bekannt. Diese lsoliervorrichtung oder Ummantelung enthält aus gebundenen Keramikfasern bestehendes Isoliermaterial, welches am Außenumfang des Rohres angeordnet ist und aus zwei starren Halbschalen oder Formteilhälften besteht. Die Halbschalen oder Formteilhälften werden nach dem Aufsetzen auf die Außenfläche des Rohres von einem Außenmantel umgeben, welcher als eine Stahlfolie ausgebildet ist, deren überlappenden Randbereiche insbesondere mittels einer Schweißnaht verbunden werden. Mittels der Metallfolie, welche eine vergleichsweise geringe Dicke in der Größenordnung von 100 µm aufweist, wird das Isoliermaterial bzw. Keramikfasermaterial auf die Außenfläche des Rohres gedrückt und zusammengehalten. Die Innenfläche des Isoliermaterials liegt unmittelbar und ungeschützt auf dem Rohr und kann durch äußere Krafteinwirkungen, Vibrationen oder dergleichen beschädigt werden. Die Fertigung und Montage der aus verschiedenen Teilen zusammenzusetzenden lsoliervorrichtung erfordern einen erheblichen Aufwand.

Ferner ist aus der DE-A1 42 05 427 eine lsoliervorrichtung bekannt, welche ein in Längsrichtung geschlitztes, zusammenbiegbares Kunststoffrohr aufweist. Das gegen Wärmeverlust zu isolierende Rohr wird mit einer Dämmschicht ummantelt, auf deren Außenfläche dann das genannte geschlitzte Kunststoffrohr angeordnet wird. Das Kunststoffrohr weist an den Rändern des genannten Schlitzes einander gegenüberliegende Stoßflächen mit einer Nut- und Federverbindung auf, wobei mittels übergreifenden Hakenarmen und Hinterschneidungen eine formschlüssige Schnappverbindung geschaffen ist. Das als Außenmantel ausgebildete Kunststoffrohr besitzt eine vergleichweise große radiale Dicke, und zwar vor allem wegen der genannten Nut- und Federverbindung der einander gegenüberliegenden Stoßflächen. Für Hochtemperaturanwendungen können derartige Kunststoffrohre, die insbesondere aus Polypropylen bestehen, nicht zum Einsatz gelangen.

Isoliervorrichtungen der genannten Art gelangen vor allem bei Verbrennungsmaschinen zum Einsatz, um die Wärmeabgabe nach außen auf ein akzeptables Maß zu reduzieren. So werden beispielsweise die Abgasrohre oder Abgasturbinen von stationären Motoren oder Schiffsmotoren mit derartigen Isoliervorrichtungen versehen. Es werden regelmäßig Halbschalen oder bei komplexeren Anlagen auch mehrere Teilschalen vorgesehen, welche üblicherweise als Isolierhauben bezeichnet werden und einen erheblichen Fertigungs- und Montageaufwand erfordern. Die lsolierhauben oder Halbschalen sind im wesentlichen starr ausgebildet und enthalten einen Außenmantel sowie Isoliermaterial und werden fest miteinander verbunden. So werden zur Isolation von Rohren üblicherweise zwei Halbschalen vorgesehen, welche, bezogen auf die Längsachse, sich im wesentlichen jeweils über 180° erstrecken, wobei die jeweiligen Außenmäntel an den axialen Längsrändern fest miteinander verbunden sind, beispielsweise durch Schweißen, Nieten oder Schrauben. Zur Montage werden derartige Halbschalen von beiden Seiten her auf das Rohr aufgesetzt und mit zusätzlichen Mitteln fest miteinander verbunden, wobei an den axialen Längskanten geeignete Dichtungsmittel zusätzlich vorgesehen werden müssen, um auch dort einen unerwünschten Wärmeabfluß zu vermeiden. Ferner müssen zusätzliche Befestigungs- und Arretierungsmittel zwecks Verbindung mit dem Abgasrohr oder dergleichen vorgesehen werden, wodurch ein erheblicher Konstruktions- und Montageaufwand bedingt ist.

Hiervon ausgehend liegt der Erfindung die Aufgabe zugrunde, die aufgezeigten Nachteile zu vermeiden und die Isoliervorrichtung dahingehend weiterzubilden, daß bei einfacher Konstruktion der Fertigungs- und Montageaufwand reduziert wird. Die Handhabung bei der Montage soll erleichtert werden und letztere in einfacher Weise und schnell durchführbar sein, wobei nach der Montage eine effektive Wärmedämmung, insbesondere bei Hochtemperaturanwendungen, gewährleistet sein soll. Die Isoliervorrichtung soll vor allem für Körper oder Maschinenelemente ausgelegt und verwendbar sein, welche von heißen Medien, insbesondere Abgasen, mit Temperaturen größer als 800°C durchströmbar sind.

Die Lösung dieser Aufgabe erfolgt gemäß den im Patentanspruch 1 angegebenen Merkmaten.

Die erfindungsgemäße lsoliervorrichtung zeichnet sich durch einen einfachen und funktionsgerechten Aufbau aus und kann in einfacher Weise auf das Maschinenteil und/oder den zu isolierenden Körper, wie insbesondere ein Abgasrohr, montiert werden. Die Isoliervorrichtung ist einteilig und derart flexibel ausgebildet, daß sie nach dem radialen Aufspreizen an ihren im wesentlichen axialen Längskanten über den zu isolierenden Körper, wie beispielsweise ein Abgasrohr, geschoben werden kann und nachfolgend die Längskanten zur gegenseitigen Anlage gebracht werden können. Die Isoliervorrichtung ist eine vorgefertigte Baugruppe mit Außenmantel und Innenmantel, welcher einen kleineren Durchmesser als der Außenmantel aufweist, wobei in dem derart geschaffenen, zumindest näherungsweise ringförmigen Hohlraum zwischen dem Außenmantel und dem Innenmantel das Isoliermaterial angeordnet ist. Der Außenmantel und der Innenmantel sind entsprechend der Außenkontur des zu isolierenden Körpers ausgebildet und erstrecken sich bezogen auf die Längsachse des Körpers über einen Winkelbereich von zumindest näherungsweise 360°. Nach dem Aufschieben auf den zu isolierenden Körper werden mittels geeigneten Halte- und/oder Spannelementen die Längskanten der Isoliervorrichtung miteinander gekoppelt. Der Innenmantel und der Außenmantel bestehen in vorteilhafter Weise aus federelastischen und/oder flexiblen Blechen und sind ausschließlich im Bereich wenigstens einer ihrer Längskanten miteinander fest verbunden, während im übrigen, insbesondere an den axialen Stirnseiten, keine in radialer Richtung wirksame, starren Verbindungselemente vorgesehen sind. Zur Verbindung des Außenmantels und des Innenmantels sind an wenigstens einem Längsrand , bevorzugt an beiden Längsrändern, Stege vorgesehen. Diese Stege sind in vorteilhafter Weise durch Umbiegen wenigstens eines Längsrandes des Außenmantels und/oder des Innenmantels hergestellt, wobei insbesondere durch Falzen und/oder durch Punktschweißen oder mittels Nieten oder Schrauben eine feste dauerhafte Verbindung zwischen Außenmantel und Innenmantel vorgesehen ist.

Bei Ausbildung der Isoliervorrichtung für im wesentlichen zylindrische Rohre, sind der Innenmantel und der Außenmantel im Ruhezustand, also vor und nach der Montage, gleichfalls zylindrisch über einen Winkelbereich von im wesentlichen 360° ausgebildet. Zwischen dem Innenmantel und dem Außenmantel ist ein ringförmiger und/oder im wesentlichen zylindrischer Hohlraum vorhanden, dessen radiale Tiefe über den Umfang im wesentlichen konstant ist und in welchem das Isoliermaterial angeordnet ist. Aufgrund der flexiblen Ausbildung von Innenmantel, Außenmantel und Isoliermaterial sowie der Tatsache, daß an deren axialen Stirnseiten keine feste Verbindungsmittel vorgesehen sind, kann die Isoliervorrichtung derart aufgespreizt werden, daß die Längskanten einen Abstand zueinander aufweisen, welcher das Überschieben der Isoliervorrichtung in radialer Richtung über und auf den zu isolierenden Körper, wie insbesondere eine Rohrleitung, einschließlich von Verbindungsflanschen der Rohrleitung und/oder Kompensatoren ermöglicht.

In vorteilhafter Weise ist im Bereich der Längskanten wenigstens ein Überlappungselement vorhanden, welches nach der Montage eine feste und insbesondere dichte Verbindung an den Längskanten ermöglicht. Ein unerwünschter Wärme- oder Energieabfluß, welcher auch als "Durchblasen" bezeichnet werden kann, wird vermieden. So kann zur Abdichtung an der einen Längskante ein U-förmiges Überlappungselement vorgesehen sein, welches sich in Längsrichtung erstreckt und in welches die zugeordnete andere Längskante einschiebbar ist. Ferner kann zwischen den einander gegenüberliegenden Längskanten geeignetes Dichtmaterial zusätzlich oder alternativ angeordnet sein. Desweiteren können im Bereich der wenigstens eine Längskante Öffnungen für Abzweigleitungen der Rohrleitung vorgesehen sein. Es sei an dieser Stelle ausdrücklich festgehalten, daß die erfindungsgemäße Isoliervorrichtung nicht nur für zylindrische Rohre vorgesehen werden kann, sondern ganz allgemein für Körper oder Maschinenelemente, über welche die erfindungsgemäße Isoliervorrichtung nach entsprechendem Aufspreizen geschoben werden kann, wobei nachfolgend die Längskanten miteinander verbindbar sind und in vorteilhafter Weise die erwähnten Überlappungselemente miteinander in Eingriff bringbar sind. Ferner sei ausdrücklich festgehalten, daß die erfindungsgemäße Isoliervorrichtung bevorzugt für den Hochtemperaturbereich, insbesondere größer als 800°C, zum Einsatz gelangt, wobei hier nur beispielshaft auf Abgasrohre oder Abgasturbinen oder Ladeeinrichtungen, bevorzugt für Großmaschinen bzw. Großmotoren, verwiesen sei. Gleichwohl kann die lsoliervorrichtung im Rahmen der Erfindung auch für den Niedertemperaturbereich ausgelegt sein.

In einer besonderen Ausgestaltung der Erfindung sind an der Innenfläche der lsoliervorrichtung Abstandselemente vorgesehen, welche in vorteilhafter Weise als Verschleißschutz und/oder zur Kompensation von Fertigungstoleranzen ausgebildet sind. So können an der Innenseite bzw. am Innenmantel, zweckmäßig über den gesamten Umfang und/oder nur über einen Teil der Längserstreckung der Isoliervorrichtung, zweckmäßig jeweils in den axialen Endbereichen, gewellte Bleche oder zahnbandartige Elemente vorgesehen sein, über welche die Isoliervorrichtung beabstandet an der Außenfläche des zu isolierenden Körpers, Rohres oder dergleichen in einem vorgebbaren Abstand angeordnet wird.

Weiterbildungen und besondere Ausgestaltungen der Erfindung sind in den Unteransprüchen und der weiteren Beschreibung angegeben.

Die Erfindung wird nachfolgend anhand der in der Zeichnung erläuterten besonderen Ausführungsbeispiele näher erläutert, ohne daß insoweit eine Beschränkung erfolgt. Es zeigen:
- Fig. 1: schematisch eine axiale Ansicht der erfindungsgemäßen lsoliervorrichtung während der Montage auf ein Rohr,
- Fig. 2: eine perspektivische Darstellung der lsoliervorrichtung,
- Fig. 3: eine axiale Ansicht der Isoliervorrichtung nach der Montage auf das Rohr,
- Fig. 4: teilweise einen axialen Schnitt im Bereich der Längskanten,
- Fig. 5: ein weiteres Ausführungsbeispiel des Bereichs der Längskanten,
- Fig. 6: ein drittes Ausführungsbeispiel des Bereichs der Längskanten,
- Fig. 7: einen Schnitt in einer axialen Schnittebene im Verbindungsbereich von zwei axial aneinander anschließenden Isoliervorrichtungen,
- Fig. 8, 9: teilweise einen axialen Schnitt, bzw. eine axiale Ansicht des Stirnbereichs eines anderen Ausführungsbeispiels der lsoliervorrichtung,
- Fig. 10: einen axialen Längsschnitt durch eine weitere Ausführungsform der Isoliervorrichtung,
- Fig. 11: teilweise einen Schnitt entlang Schnittlinie B in Fig. 10,
- Fig. 12: einen axialen Schnitt durch ein Ausführungsbeispiel mit einem Kompensatoren enthaltenden Abgasrohr,
- Fig. 13, 14: einen Schnitt in einer axialen bzw. radialen Schnittebene durch eine bevorzugte Ausführungsform der Isofiervorrichtung mit radial innenliegenden Abstandselementen als Verschleißschutz,
- Fig. 15: ein weiteres Ausführungsbeispiel zur Ausgestaltung der Längskanten.

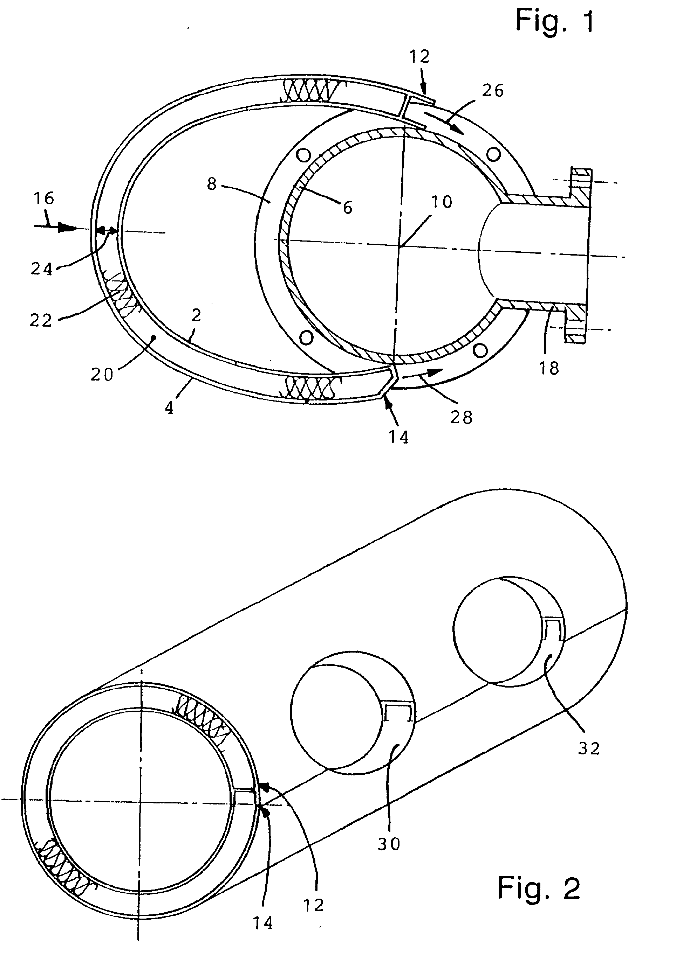

Fig. 1 zeigt die Isoliervorrichtung mit einem Innenmantel 2 und einem Außenmantel 4 während der Montage über ein Rohr, welches einen Flansch 8 zur Verbindung mit einem weiteren Rohr aufweist. Wie ersichtlich, ist die Isoliervorrichtung radial derart aufgespreizt, daß die beiden im wesentlichen parallel zur Längsachse 10 verlaufenden Längskanten 12, 14 in Richtung des Pfeiles 16 über das Rohr 6 geschoben werden können. Im Rahmen der Erfindung kann die Isoliervorrichtung ferner derart ausgebildet sein, daß diese über den Flansch 8 geschoben werden kann, wobei der Innendurchmesser des Innenmantels im wesentlichen gleich groß ist wie der Außendurchmesser des Flansches 8. Eine derartige Ausführungsform ist in den Fällen vorgesehen, in welchen die Isoliervorrichtung eine größere axiale Länge aufweist als die axialen Abstände der Flansche oder Flanschverbindungen einzelner Rohre der Rohrleitung. Das Rohr 6 weist ferner einen Abzweigstutzen 18 zum Anschluß eines weiteren Rohres auf. Im Bereich der genannten Längskanten 12, 14 ist der Innenmantel 2 mit dem Außenmantel 4 verbunden, während im übrigen aber keine Verbindungselemente zwischen dem Innenmantel 2 und dem Außenmantel 4 vorhanden sind. Die Verbindung von Innenmantel 2 und Außenmantel 4 an den Längskanten erfolgt insbesondere durch Schweißen, Nieten oder Falzen, wobei in vorteilhafter Weise im Verbindungsbereich eine Einlage aus Dicht- und/oder lsoliermaterial zur Verhinderung eines Wäremeabflusses vorgesehen ist. Der Innenmantel 2 und der Außenmantel 4 sind flexibel und/oder federelastisch ausgebildet und bestehen bevorzugt aus Metall-Blechen, wobei der dazwischenliegende Hohlraum 20 Isoliermaterial 22 enthält, insbesondere aus Keramikfasern, Steinwolle oder dergleichen, welches erfindungsgemäß biegbar und/oder flexibel ist und das Aufspreitzen ohne weiteres ermöglicht.

Der Innenmantel 2 und der Außenmantel 4 sind in vorteilhafter Weise in axialer ebenso wie in Umfangsrichtung einteilig durchgehend ausgebildet. Da abgesehen von den Längskanten bzw. dort vorgesehenen Stege zwischen dem Innenmantel 2 und dem Außenmantel 4 keine radialen Verbindungen vorhanden sind, wird beim Aufspreizen der Isoliervorrichtung zum Aufschieben auf das Rohr 6 bzw. auf einen anderen zu isolierenden Körper der Abstand 24 zwischen dem Innenmantel 2 und dem Außenmantel 4 im Vergleich mit dem radialen Abstand im Bereich der Längskanten 12, 14 vergrößert. Beim weiteren Aufschieben der Isoliervorrichtung auf das Rohr 6 bzw. den Flansch 8 werden infolge der Federelastizität des Innenmantels 2 und des Außenmantels 4 die Längskanten 12, 14 in Richtung der Pfeile 26, 28 aufeinander zubewegt, so daß nach dem vollständigen Aufschieben die Längskanten 12, 14 aneinander liegen und die Isoliervorrichtung koaxial zum Rohr 6 angeordnet ist und dieses vollständig und abdichtend umschließt.

Fig. 2 zeigt eine perspektivische Darstellung der Isoliervorrichtung ohne das erwähnte Rohr, wobei im Bereich der dicht aneinander liegenden Längskanten 12, 14 Öffnungen 30, 32 für Abzweigstutzen des Rohres vorgesehen sind. Die Öffnungen 30, 32 werden durch halbkreisförmige Ausnehmungen im Bereich der Längskanten der Isoliervorrichtung gebildet, wobei die Radien der Ausnehmungen und somit der genannten Öffnungen 30, 32 auf die Außenradien der Abzweigstutzen abgestimmt sind. In entsprechender Weise können Ausnehmungen für Befestigungseinrichtungen, Laschen oder dergleichen des Rohres oder der Rohrleitung vorgesehen sein. Sofern der oder die Abzweigstutzen oder dergleichen eine von der zylindrischen Form abweichende Außenkontur aufweisen, sind die genannten Öffnungen dementsprechend ausgebildet. Auch kann gegebenenfalls nur an einer der beiden dicht aneinanderliegenden Längskanten eine Öffnung für einen Abzweigstutzen vorgesehen sein.

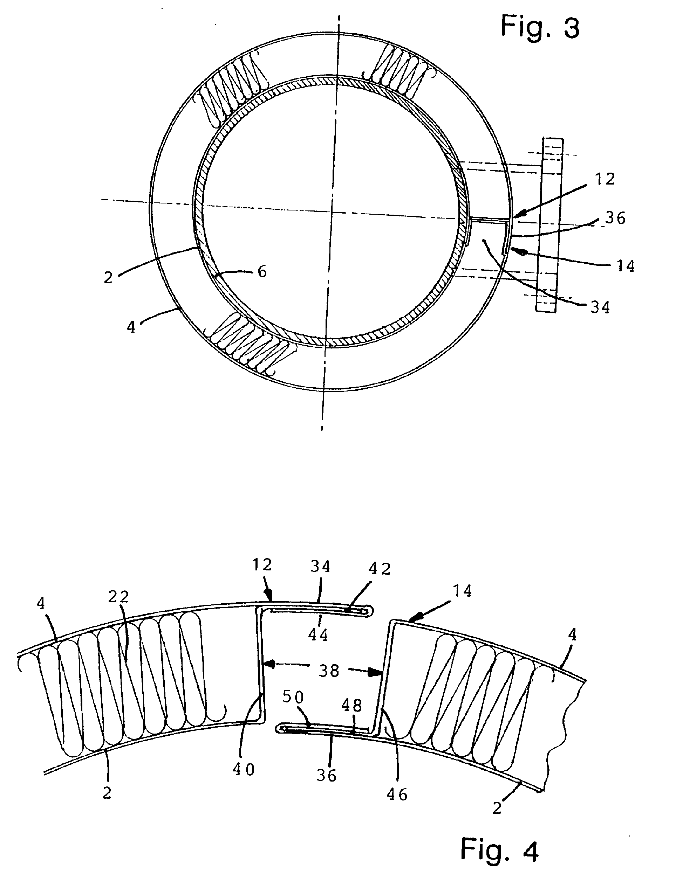

In Fig. 3 ist eine axiale Ansicht der montierten und koaxial zum Rohr 6 angeordneten Isoliervorrichtung dargestellt. Zum dichten Verschluß der einteilig ausgebildeten Isoliervorrichtung sind im Bereich der einander zugeordneten Längskanten 12, 14 in bevorzugter Weise Überlappungselemente 34, 36 vorgesehen, welche in bevorzugter Weise integrale Bestandteile der Isoliervorrichtung und/oder des Innenmantels 2 und des Außenmantels 4 sind. Gemäß der hier dargestellten Ausführungsform ist an der einen Längskante 12 das Überlappungselement 34 als ein in Umfangsrichtung weisender Verlängerungskörper ausgebildet, welcher in das U-förmige Überlappungselement 36 an der zugeordneten Längskante 14 eingreift. Die radiale Dicke des Verlängerungskörpers bzw. Überlappungselements 34 ist auf den radialen Abstand der Schenkel des U-förmigen Überlappungselements 36 derart abgestimmt, daß eine zumindest näherungsweise dichte Anlage erreicht ist und/oder eine labyrinthartige Abdichtung sichergestellt ist. Zusätzlich oder alternativ können ferner die Längskanten mit Isolier- oder Dichtmaterial abgedichtet sein, wobei hier nur beispielshaft auf ein außen über den beiden Längskanten angeordnetes Dichtband verwiesen sei, welches insbesondere mittels Klebemittel mit den Längskanten dicht und fest verbunden ist. Es sei hier ausdrücklich festgehalten, daß unabhängig von der konkreten Ausgestaltung erfindungsgemäß die Verbindung der Längskanten derart vorgegeben ist, daß ein unzulässiger Wärmeabfluß nicht erfolgen kann.

Fig. 4 zeigt vergrößert eine Ausführungsform des Verbindungsbereichs der Längskanten 12, 14, welche aus Gründen der Übersicht in einem in Umfangsrichtung gemessenen Abstand 38 zueinander dargestellt sind. Nach der kompletten Montage ist der Abstand 38 zumindest näherungsweise gleich Null. Der Innenmantel 2 und der Außenmantel 4 sind durch Falzen und/oder Umbiegen der Längsränder miteinander verbunden. Der im wesentlichen zylindrische Innenmantel 2 besitzt einen radial nach außen abgewinkelten Steg 40, an welchen ein in Umfangsrichtung abgewinkelter und zur Längskante 14 weisender weiterer Steg 42 anschließt. Der weitere Steg 42 liegt innen am Ende des Außenmantels 4 an und wird ferner von einem um 180° umgebogenen Innensteg 44 des Außenmantels 4 derart umgriffen, daß eine feste und stabile Verbindung des Innenmantels 2 mit dem Außenmantel 4 gewährleistet ist. Vorteilhafterweise können die genannten Stege, insbesondere durch Punktschweißen, dauerhaft miteinander verbunden sein. Die genannten Stege bilden ferner das bereits erwähnte Überlappungselement 34, welches nach abgeschlossener Montage den Außenmantel 4 der Längskante 14 übergreift. Analog ist an der anderen Längskante 14 das radial innenliegende zweite Verbindungs- und/oder Überlappungselement 36 vorhanden, wobei der Außenmantel 4 einen radial nach innen gerichteten Steg 46 mit einem in Umfangsrichtung anschließenden und abgewinkelten weiteren Steg 42 enthält, welcher von einem Innensteg 50 des Innenmantels 2 übergriffen wird. Nach erfolgter Montage geht der Abstand 38 gegen Null und die im wesentlichen radial gerichteten Stege 40, 46 liegen zumindest näherungsweise aneinander. Mittels der beiden Überlappungselemente 34, 36 ist somit eine funktions gerechte Abdichtung im Bereich der einander zugeordneten und aneinander liegenden Längskanten 12, 14 sichergestellt.

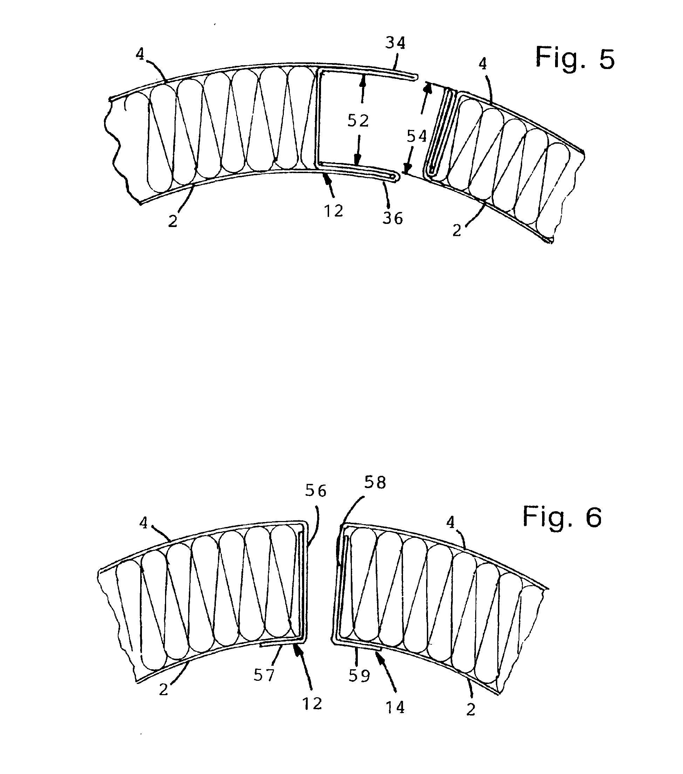

Fig. 5 zeigt eine weitere Ausführungsform, gemäß welcher ähnlich Fig. 1 an der Längskante 12 die beiden Überlappungselemente 34, 36 U-förmig angeordnet sind. Der zwischen den Innenflächen der beiden Überlappungselemente 34, 36 gemessene Abstand 52 ist zumindest näherungsweise gleich wie die radiale Dicke 54 der Längskante 14, welche hier wiederum aus Gründen der Übersicht in einem Abstand zur Längskante 12 dargestellt ist. Das eine Überlappungselement 34 ist durch Umbiegen des Außenmantels 4 um 180° erzeugt, wobei radial nach innen zwei jeweils um 90° abgewinkelte Stege anschließen. Das andere Überlappungselement 36 bildet entsprechend den obigen Ausführungen gleichzeitig das Verbindungselement des Innenmantels 2 mit dem Außenmantel 4. An der anderen Längskante 14 ist gleichfalls durch ineinander greifendes Abwinkeln der Enden des Innenmantels 2 und des Außenmantels 4 das Verbindungselement geschaffen. Auch bei dieser Ausführungsform sind in vorteilhafter Weise die Stege der erläuterten Verbindungselemente, insbesondere durch Punktschweißen, fest und dauerhaft miteinander verbunden.

Fig. 6 zeigt eine weitere Ausgestaltung der Längskanten, wobei Überlappungselemente nicht vorgesehen sind. Vielmehr enthält der Innenmantel 2 an beiden Längskanten 12, 14 jeweils einen radial nach außen abgewinkelten Steg 40, 41, welche jeweils von zweifach und nach innen abgewinkelten Stegen 56-59 des Außenmantels 4 übergriffen werden. Auch bei dieser Ausführungsform sind die aneinander liegenden Stege des Innenmantels 2 und des Außenmantels 4 in zweckmäßiger Weise, insbesondere durch Punktschweißen, fest miteinander verbunden.

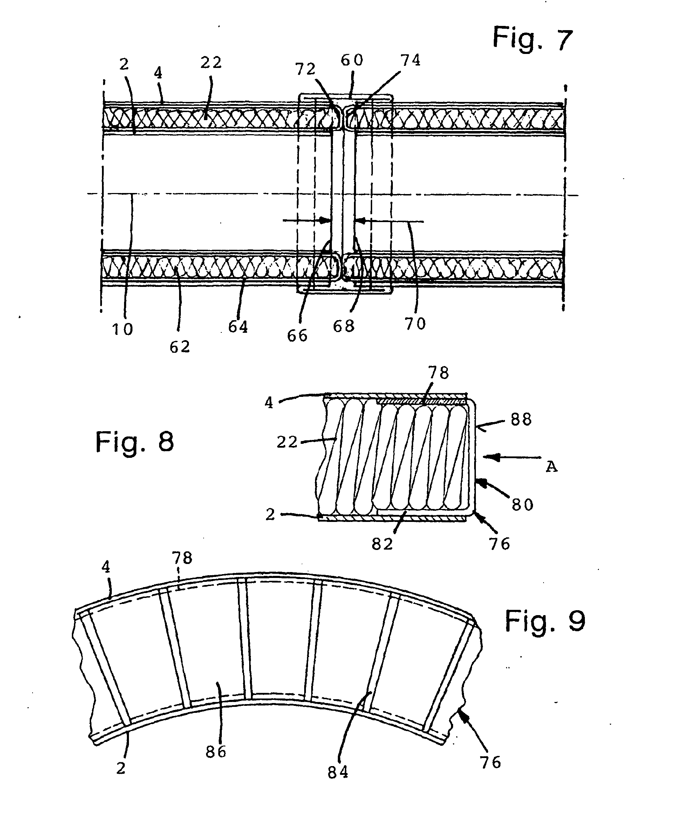

In Fig. 7 ist in einer axialen Schnittebene der Verbindungsbereich von zwei axial nebeneinander angeordneten lsollervorrichtungen dargestellt, welche mittels eines ringförmigen Spann- und/oder Halteelements 60 dicht und fest miteinander verbunden sind. Das Spann- und/oder Halteelement 60 wird nachfolgend der Einfachheit halber als Halteelement bezeichnet und ist als Rohrschelle, Spannband, Schneckenbänder oder dergleichen ausgebildet, wobei geeignete Verbindungsmittel, wie Klemmhebelverschluß, Schraubverbindungen oder dergleichen vorgesehen sind. Das Halteelement 60 umgibt die axial aneinander schließenden und in vorteilhafter Weise dicht aneinander liegenden axialen Stirnflächen der beiden Isoliervorrichtungen über den kompletten Umfangsbereich koaxial zur Längsachse 10. Alternativ können im Rahmen der Erfindung auch lediglich im Bereich der Längskanten geeignete Verbindungs- oder Verschlußelemente, wie Schraubverbindungen, Klemmhebelverschlüsse oder dergleichen, vorgesehen sein, welche direkt an der Isoliervorrichtung befestigt sind. Unabhängig von der konkreten Ausgestaltung handelt es sich erfindungsgemäß immer um lösbare Halte- und Verbindungselemente. Das biegbare Isoliermaterial 22 enthält in vorteilhafter Weise eine innere Isolierfüllung 62, insbesondere Isolierwatte und/oder Keramikfasern, welche von einer im wesentlichen geschlossenen Isolierhülle 64 oder Isoliermatte umgeben ist, welche vorteilhaft als ein vergleichsweise dichtes Gewebe, insbesondere aus Keramikfasern ausgebildet ist. Das Isoliermaterial und/oder die Isoliermatte sind hinreichend flexibel derart, daß das Einfüllen in den Hohlraum zwischen dem Innenmantel 2 und dem Außenmantel 4 problemlos möglich ist. Das Einfüllen kann in zweckmäßiger Weise bei aufgespreizten Längskanten durchgeführt werden, zumal mit zunehmender Entfernung von den Längskanten der Abstand zwischen dem Innenmantel 2 und dem Außenmantel 4 vergrößert ist, so daß das Isoliermaterial 22 ohne Schwierigkeiten in den entsprechend vergrößerten Hohlraum eingebracht werden kann. Festzuhalten bleibt an dieser Stelle, daß der Hohlraum in bevorzugter Weise frei von Stützen oder Verbindungselementen zwischen dem Innenmantel 2 und dem Außenmantel 4 ist.

Darüber hinaus sei ausdrücklich darauf hingewiesen, daß bei Bedarf das Isoliermaterial 22 problemlos ausgetauscht werden kann. Bekanntlich ist bei Isoliervorrichtungen mit einem Zersetzen des Isoliermaterials, insbesondere aufgrund von den einwirkenden hohen Temperaturen oder Vibrationen zu rechnen. Vorbekannte Isoliervorrichtungen mit allseits fest und dicht durch Schweißen, Nieten oder Schrauben verbundenen Mänteln mußten infolge reduzierter Isolation komplett ersetzt werden. Hingegen ist bei der erfindungsgemäßen Isoliervorrichtung lediglich das Isoliermaterial 22 auszutauschen, wobei im übrigen aber der flexible Mantel mit dem Innenmantel 2 und dem Außenmantel 4 beibehalten wird, welche ausschließlich im Bereich wenigstens einer der Längskanten, bevorzugt an beiden, miteinander fest verbunden sind. Die axialen Stirnseiten sind erfindungsgemäß offen und ermöglichen in einfacher Weise den Einbau und/oder Ausbau des Isoliermaterials 22.

Wie aus Fig. 7 ferner ersichtlich, steht das Isoliermaterial bzw. die Isoliermatte der jeweiligen Mäntel über deren axialen Stirnkanten 66, 68 um einen vorgegebenen Abstand 70 vor. Die Stirnflächen 72, 74 des Isoliermaterials bzw. der Isoliermatten liegen hingegen dicht aneinander. Es sei ausdrücklich festgehalten, daß die Isoliermaterialien 22 bzw. die Isoliermatten hinreichend flexibel und/oder elastisch ausgebildet sind. Bei der Montage der Isoliervorrichtungen werden diese derart axial gegeneinander gepreßt, daß in der erläuterten Weise die genannten Stirnflächen 72, 74 dichtend aneinanderliegen und erst nachfolgend erfolgt die feste Verbindung mittels des Halteelements 60. Ergeben sich während des Betriebs vor allem infolge von Temperaturänderungen axiale Relativbewegungen der Innenmäntel 2 und/oder der Außenmäntel 4 der beiden Isoliervorrichtungen, so bleibt die dichte Anlage der genannten Stirnflächen 72, 74 gleichwohl aufgrund der Elastizität des Isoliermaterials 22 erhalten. Die in der Zeichnung nicht dargestellten anderen axialen Stirnflächen der Isoliervorrichtungen können jeweils in übereinstimmender Weise, wie in Fig. 7 dargestellt, ausgebildet sein.

Fig. 8 zeigt teilweise in einer axialen Schnittebene den Stirnbereich eines anderen Ausführungsbeispiels der Isoliervorrichtung, während Fig. 9 eine axiale Ansicht in Blickrichtung A gemäß Fig. 8 zeigt. An den Stirnkanten 66, 68 ist ein U-förmiger und als Ring ausgebildeter Abstandskörper 76 vorgesehen. Der radial äußere ringförmige Steg 78 liegt an der Innenfläche des Außenmantels 4 an und ist bevorzugt mit diesem fest, insbesondere durch Punktschweißen oder Nieten, verbunden. Der radial liegende Verbindungsschenkel 80 sowie der an der Innenfläche des Innenmantels 2 anliegende innere Schenkel 82 des Abstandskörpers 76 enthalten im wesentlichen radial gerichtete Schlitze 84 zwischen einer Anzahl von Lamellen 86. Alternativ kann der Abstandskörper 76 auch nur am Innenmantel 4 befestigt sein. Da der Abstandskörper 76 entweder am Innenmantel 2 oder am Außenmantel 4 befestigt ist, wird durch den Abstandskörper 76 das oben erläuterte Aufspreizen und die damit verbundene Abstandsänderung zwischen dem Innenmantel 2 und dem Außenmantel 4 in keiner Weise behindert. Wie aus Fig. 8 ersichtlich, liegt das Isoliermaterial 22 am Abstandskörper 76 an. Am anderen, gemäß Fig. 8 linken, nicht dargestellten Ende oder Stirnbereich der Isoliervorrichtung ist hingegen kein Abstandskörper 76 vorhanden, sondern dort ragt das Isoliermaterial entsprechend Fig. 7 über die Stirnkante der Mäntel 2 bzw. 4 hinaus. Wird mit der Isoliervorrichtung gemäß Fig. 8 rechts anschließend ein entsprechendes Isolierelement angeordnet, so liegt dessen Isoliermaterial an der axialen Stirnfläche 88 des Abstandskörpers 76 an.

Im Rahmen der Erfindung kann die Isoliervorrichtung ferner an beiden axialen Enden entpsrechend Fig. 8 ausgebildet sein und jeweils einen Abstandskörper 76 aufweisen, wobei ferner die axial anschließende oder anschließenden Isoliervorrichtungen in gleicher Art und Weise jeweils an beiden Enden einen Abstandskörper 76 enthalten. Das Spann- und/oder Halteelement ist bei dieser Ausgestaltung als ein isolierendes Abdeckband ausgebildet oder mit einem derartigen versehen, damit ein freier Wärmedurchgang unterbunden wird.

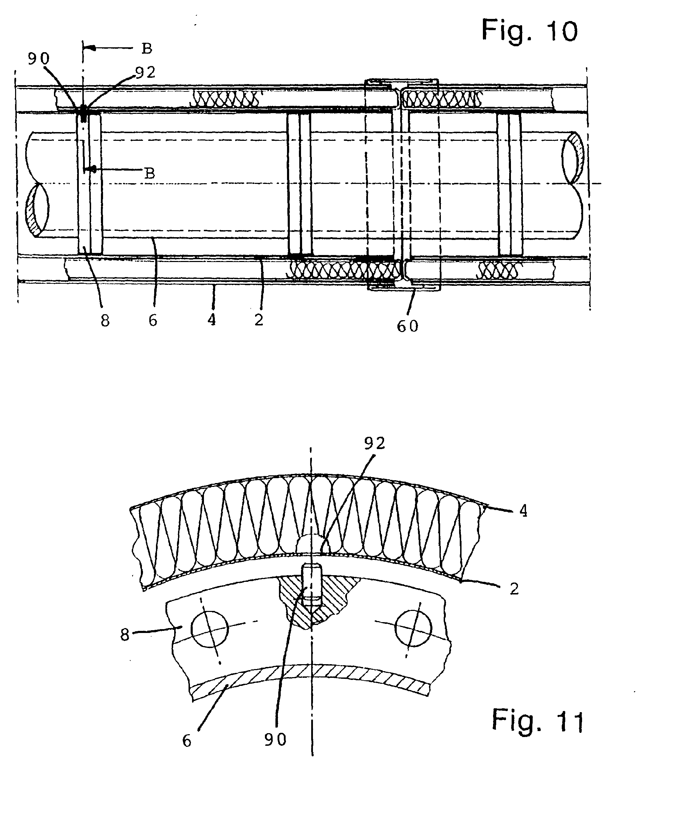

Eine Weiterbildung der Erfindung ist in Fig. 10 in einer axialen Schnittebene und ferner in Fig. 11 teilweise in einem Schnitt entlang Schnittlinie B gemäß Fig. 10 dargestellt, wobei die Isoliervorrichtung zur Verdeutlichung radial beabstandet zum Flansch 8 dargestellt ist. Zur axialen Festlegung und Arretierung enthält der Flansch 8 einen Stift 90, welcher nach der Montage in eine bevorzugt als Langloch ausgebildete Ausnehmung 92 des Innenmantels 2 eingreift. Es ist somit ein Festpunkt für die lsoliervorrichtung bezüglich des Rohres 6 vorhanden, um einerseits eine definierte Positionierung der Isoliervorrichtung bezüglich des Rohres 6 zu gewährleisten und um andererseits in einem vorgegebenen Maße Ausgleichsbewegungen, insbesondere infolge von durch Temperaturänderungen bedingte Längenänderungen zu gewährleisten und unerwünschte Spannungen von der lsoliervorrichtung fernzuhalten.

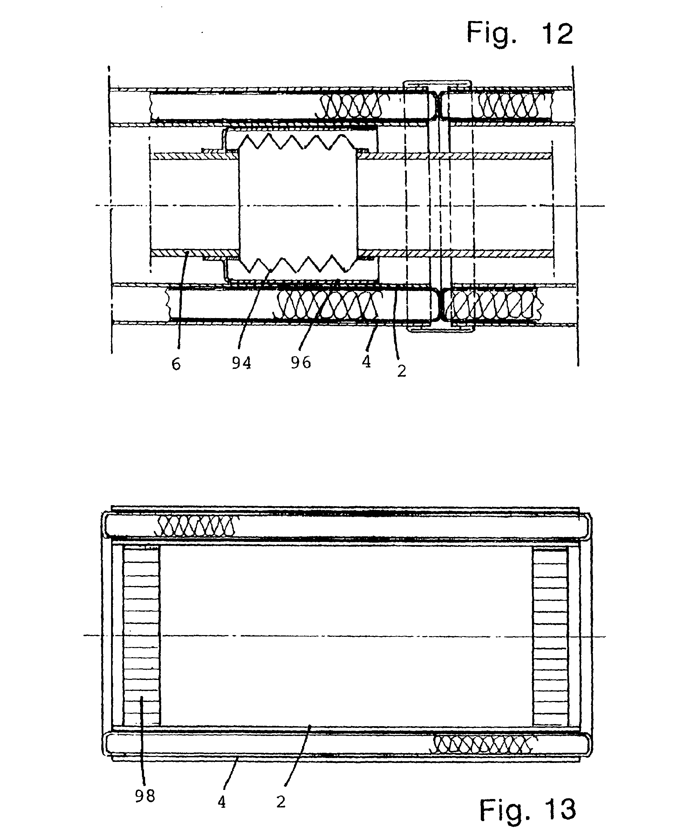

In Fig. 12 ist ein weiteres Ausführungsbeispiel in einer axialen Schnittebene dargestellt, wobei die Rohrleitung wenigstens einen Kompensator 94 zum Längenausgleich enthält. Der Kompensator 94 ist von einem Schutzrohr 96 umgeben, auf welchem der Innenmantel 2 der Isoliervorrichtung aufliegt. In einer derart ausgebildeten Rohrleitung entspricht der Außendurchmesser des Schutzrohrs 96 in zweckmäßiger Weise dem Außendurchmesser der oben bereits erläuterten Flansche, so daß die einzelnen Isoliervorrichtungen jeweils den gleichen Innendurchmesser aufweisen können.

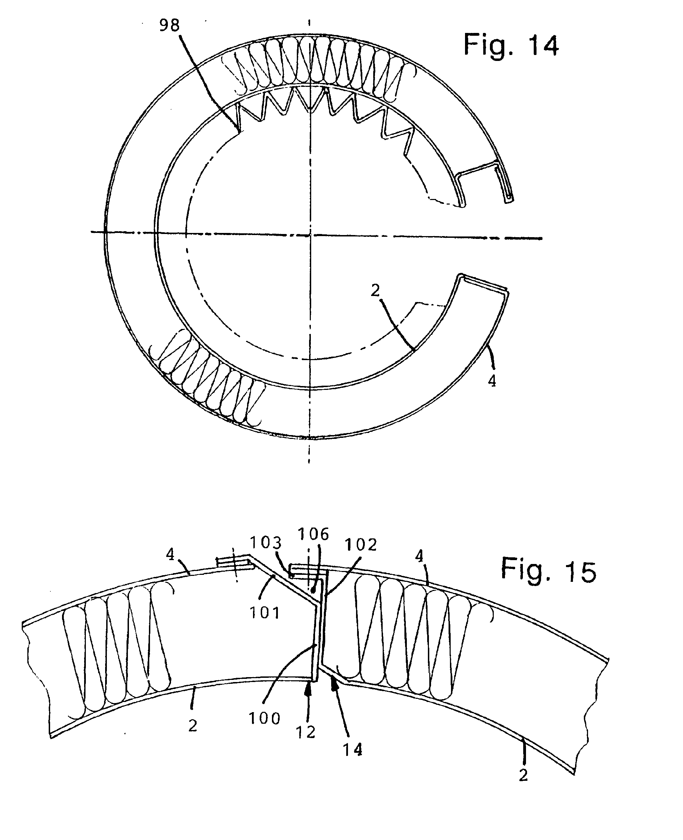

Eine besondere Ausgestaltung der erfindungsgemäßen Isoliervorrichtung ist in Fig. 13 in einer axialen Schnittebene und in Fig. 14 in einer axialen Ansicht dargestellt. An der Innenseite des Innenmantels 2 ist ein Abstandselement 98 angeordnet, welches hier als ein Zahnband ausgebildet ist. Über das Abstandselement 98 ist die Isoliervorrichtung auf dem Rohr bzw. dessen Flansch und/oder dem vorstehend erläuterten Schutzrohr aufgelagert. Das Abstandselement 98 dient in besonders vorteilhafter Weise als Verschleißschutz, da die Isoliervorrichtung nicht unmittelbar, sondern über das Abstandselement 98 mittelbar abgefangen ist. In besonders vorteilhafter Weise ist somit zwischen dem Rohr und der Isoliervorrichtung ein Luftpolster vorhanden, welches zum einen die Ableitung der Temperatur durch Konvektion fördert und zum anderen quasi eine Isolationsschicht darstellt. Relativbewegungen zwischen der lsoliervorrichtung und dem Rohr, beispielsweise infolge von Vibrationen oder Längenänderungen aufgrund von Temperaturänderungen, können somit nicht zu einer Beschädigung des Innenmantels der Isoliervorrichtung führen. Der Innenmantel kann folglich vergleichsweise dünn ausgebildet werden, ohne daß hierdurch die Lebensdauer und letztendlich die Funktionsfähigkeit der Isoliervorrichtung in irgendeiner Weise beeinträchtigt würde. Alternativ zu dem als im wesentlichen über den gesamten Umfang sich erstreckenden Zahnband können im Rahmen der Erfindung ferner einzelne, in Umfangsrichtung wesentlich kleinere Segmente, Stützbleche, Bolzen oder ähnliches vorgesehen sein. Aufgrund der Flexibilität des erfindungsgemäß vorgesehenen Abstandselements 98 wird in besonders vorteilhafter Weise ferner eine Kompensation von Fertigungstoleranzen erreicht, sei es der Isoliervorrichtung oder des Rohres und/oder der Flansche und/oder der Schutzrohre der Kompensatoren oder sonstiger Komponenten, auf welchen die Isoliervorrichtung aufgelagert ist. Schließlich sei besonders darauf hingewiesen, daß das insbesondere als Zahnband ausgebildete Abstandselement nur eine minimale Wärmeübertragung vom Rohr bzw. dem zu isolierenden Körper und der Isoliervorrichtung bzw. deren Innenmantel ergibt.

Fig. 15 zeigt eine besondere Ausgestaltung der Längskanten 12, 14 der Isoliervorrichtung. Der Innenmantel 2 besitzt radial nach außen gebogene Stege 100, 102, welche teilweise aneinander liegen. Im Rahmen der Erfindung kann zwischen den Stegen 100 und 102 in zweckmäßiger Weise auch ein Isolierstreifen angeordnet sein, welcher im wesentlichen die gleiche axiale Länge aufweist wie die Isoliervorrichtung selbst. Wie ersichtlich, ist der gemäß Zeichnung linke Steg 100 mit einem weiteren Steg 101 in Richtung zum Außenmantel 4 abgewinkelt und mit diesem beispielsweise durch Schwei-ßen oder Nieten fest verbunden. Der gemäß Zeichnung rechte Steg 102 ist ferner radial außen mit einem weiteren Steg 103 im wesentlichen rechtwinklig abgewinkelt, wobei dieser Steg 103 mit dem Außenmantel 4 wiederum bevorzugt durch Schweißen oder Nieten fest verbunden ist. Der letztgenannte Steg 103 ist in Richtung zum Steg 101, also zum anderen Längsrand hin abgewinkelt, wobei die einander zugewandten Stege 101 und 103 derart ausgebildet und angeordnet sind, daß zwischen diesen ein Spalt 106 vorhanden ist. Der Steg 103 bildet mit dem axialen Ende des Außenmantels 4 ein Überlappungselement und reicht zumindest näherungsweise bis zu dem weiteren, abgewinkelten Steg 101 des zugeordneten Längsrandes 12. Der Spalt 106 ist besonders zweckmäßiger Weise als Labyrinthspalt ausgebildet, so daß ein unterwünschter Wärmeabfluß im Bereich der Längskanten 12, 14 unterbunden wird.

### Bezugszeichen

- 2: Innenmantel
- 4: Außenmantel
- 6: Körper / Maschinenelement / Rohr
- 8: Flansch
- 10: Längsachse
- 12, 14: Längskante
- 16: Pfeil
- 18: Abzweigstutzen
- 20: Hohlraum
- 22: Isoliermaterial
- 24: Abstand
- 26, 28: Pfeil
- 30, 32: Öffnung
- 34, 36: Überlappungselement
- 38: Abstand
- 40: Steg von 2
- 42: weiterer Steg von 2
- 44: Innensteg von 4
- 46: Steg von 4
- 48: weiterer Steg von 4
- 50: Innensteg von 2
- 52: radialer Abstand von 34, 36
- 54: radiale Dicke von 14
- 56-59: Steg von 4
- 60: Spann- und/oder Halteelement
- 62: Isolierfüllung
- 64: Isolierhülle
- 66, 68: Stirnkante von 2, 4
- 70: Abstand
- 72, 74: Stirnfläche
- 76: Abstandskörper
- 78: äußerer Schenkel von 76
- 80: Verbindungsschenkel von 76
- 82: innerer Schenkel von 76
- 84: Schlitz
- 86: Lamelle
- 88: axiale Stirnfläche von 76
- 90: Stift
- 92: Ausnehmung in 2
- 94: Kompensator
- 96: Schutzrohr
- 98: Abstandselement
- 100 - 103: Steg von 2
- 106: Spalt

## Patentansprüche

1. lsoliervorrichtung für von einem heißen Medium durchströmbare Körper (6), insbesondere für von Abgasen durchströmbare Maschinenelemente wie Abgasrohre oder Ladeeinrichtungen, enthaltend dem Körper (6) zugeordnetes Isoliermaterial (22), einen flexiblen Innenmantel (2) und einen diesen sowie das Isoliermaterial (22) umgebenden flexiblen Außenmantel (4), wobei die Isoliervorrichtung als eine Baueinheit mit Stirnseiten und zwei einander zugeordneten Längskanten (12, 14) ausgebildet ist, wobei der Innenmantel (2) und der Außenmantel (4) an wenigstens einer der Längskanten (12, 14) miteinander verbunden sind und wobei die Isoliervorrichtung durch Aufspreizen im Bereich der Längskanten (12, 14) über den Körper (6) schiebbar ist und ferner nach dem Aufschieben die beiden Längskanten (12, 14) zumindest näherungsweise aneinander liegen,
**dadurch gekennzeichnet,**
**dass** der Innenmantel (2) und der Außenmantel (4) ausschließlich im Bereich der wenigstens einen Längskante (12, 14) mittels Stegen (40, 42, 44) miteinander verbunden sind, wobei zwischen dem Innenmantel (2) und dem Außenmantel (4) zunächst ein Hohlraum (10) vorhanden ist,
**dass** der zur Aufnahme des Isoliermaterials (22) vorgesehene Hohlraum (20) im Bereich wenigstens der einen Stirnseite offen ausgebildet ist und
**daß** das Isoliermaterial (22) in den Hohlraum (20) zwischen dem Außenmantel (4) und dem Innenmantel (2) austauschbar eingefüllt ist.

2. Isoliervorrichtung nach Anspruch 1, **dadurch gekennzeichnet, daß** der Innenmantel (2) und der Außenmantel (4) ausschließlich jeweils im Bereich der beiden Längskanten (12, 14) miteinander verbunden sind und/oder daß die Stege (40, 42, 44) durch Biegen der Längsränder des Innenmantels (2) und/oder des Außenmantels (4) gefertigt sind.

3. Isoliervorrichtung nach Anspruch 1 oder 2, **dadurch gekennzeichnet, daß** der Innenmantel (2) und der Außenmantel (4) aus federelastischen Metallblechen bestehen und/oder daß der radiale Abstand (24) zwischen dem Innenmantel (2, 4) über den Umfang im wesentlichen konstant ist, wobei mit zunehmender Entfernung von den Längskanten (12, 14) der Abstand (24) bei Aufspreizen der Längskanten (12, 14) vergrößerbar ist.

4. Isoliervorrichtung nach einem der Ansprüche 1 bis 3, **dadurch gekennzeichnet, daß** der Hohlraum (20) an der wenigstens einen Stirnseite über einen Winkelbereich von zumindest näherungsweise 360° offen ausgebildet ist.

5. Isoliervorrichtung nach einem der Ansprüche 1 bis 4, **dadurch gekennzeichnet, daß** das Isoliermaterial (22) an wenigstens einer Stirnseite mit einem vorgebbaren Abstand (70) axial vorsteht und/oder daß an wenigstens einer Stirnseite zwischen dem Innenmantel (2) und dem Außenmantel (4) ein Abstandskörper (76) vorgesehen ist, welcher bevorzugt U-förmig ausgebildet ist, wobei ein Verbindungsschenkel (80) und ein Schenkel (82) durch Schlitze (84) getrennte Lamellen (86) enthält.

6. Isoliervorrichtung nach einem der Ansprüche 1 bis 5, **dadurch gekennzeichnet, daß** an beiden Stirnseiten ein Abstandskörper (76) vorgesehen ist, und daß eine neben dieser ersten Isoliervorrichtung angeordnete weitere Isoliervorrichtung gleichfalls wenigstens einen entsprechenden Abstandskörper (76) aufweist, wobei im Verbindungsbereich die Abstandskörper (76) der nebeneinander angeordneten Isoliervorrichtungen zumindest näherungsweise aneinander liegen und/oder Dichtmittel vorgesehen sind, insbesondere ein isoliertes Abdeckband, und/oder ein Spann- oder Halteelement (60) über den gesamten Umfang dichtend ausgebildet ist.

7. Isoliervorrichtung nach einem der Ansprüche 1 bis 6, **dadurch gekennzeichnet, daß** das Isoliermaterial (22) mit einer Stirnfläche (72) an der Stirnfläche (74) des Isoliermaterials einer benachbarten Isoliervorrichtung oder an dem Abstandskörper (76) der benachbarten Isoliervorrichtung anliegt.

8. Isoliervorrichtung nach einem der Ansprüche 1 bis 7, **dadurch gekennzeichnet, daß** im Bereich der einander zugeordneten axialen Längskanten (12, 14) wenigstens ein Überlappungselement (34, 36) vorgesehen ist und/oder daß das Überlappungselement (34, 36) einteilig mit dem Innenmantel (2) oder dem Außenmantel (4) ausgebildet ist und/oder durch umgebogene Stege des Innenmantels (2) und/oder des Außenmantels (4) gebildet ist.

9. Isoliervorrichtung nach einem der Ansprüche 1 bis 8, **dadurch gekennzeichnet, daß** zur Schaffung eines Festpunktes die Isoliervorrichtung wenigstens eine Ausnehmung (92) enthält, welche bevorzugt als ein im wesentlichen axial verlaufendes Langloch ausgebildet ist, und daß in die Ausnehmung (92) ein mit dem Rohr (6), insbesondere dessen Flansch (8) verbundener Stift (90) oder dergleichen eingreift.

10. Isoliervorrichtung nach einem der Ansprüche 1 bis 9, **dadurch gekennzeichnet, daß** an der Innenseite des Innenmantels (2) wenigstens ein Abstandselement (98) angeordnet ist, welches bevorzugt als ein Zahnband und/oder Segment ausgebildet ist, wobei die Isoliervorrichtung über das wenigstens eine Abstandselement (98) auf dem Maschinenelement und/oder dem Rohr (6) und/oder einem Flansch (8) und/oder auf einem Schutzrohr (96) aufliegt, welches insbesondere einen Kompensator (94) umgibt.

## Claims

1. Insulating device for elements (6), through which a hot medium may pass, in particular for machine elements such as exhaust gas pipes or loading apparatuses, through which exhaust gases may pass, comprising insulating material (22) associated with the element (6), a flexible inner sheath (2) and a flexible outer sheath (4) surrounding said inner sheath and the insulating material (22), the insulating device being configured as a constructional unit having end faces and two longitudinal edges (12, 14) associated with each other, the inner sheath (2) and the outer sheath (4) being interconnected at at least one of the longitudinal edges (12, 14) and wherein the insulating device may be slid over the element (6) by expanding in the region of the longitudinal edges (12, 14) and, once it has been slid on, the two longitudinal edges (12, 14) are at least approximately adjacent to one another, **characterised in that** the inner sheath (2) and the outer sheath (4) are interconnected by means of webs (40, 42, 44) exclusively in the region of the at least one longitudinal edge (12, 14), a cavity (10) initially being present between the inner sheath (2) and the outer sheath (4), **in that** the cavity (20), which is intended to receive the insulating material (22), is configured so as to be open in the region of at least one end face, and **in that** the insulating material (22) is exchangeably inserted into the cavity (22) between the outer sheath (4) and the inner sheath (2).

2. Insulating device according to claim 1, **characterised in that** the inner sheath (2) and the outer sheath (4) are in each case interconnected exclusively in the region of the two longitudinal edges (12, 14) and/or **in that** the webs (40, 42, 44) are produced by bending the longitudinal runs of the inner sheath (2) and/or the outer sheath (4).

3. Insulating device according to either claim 1 or claim 2, **characterised in that** the inner sheath (2) and the outer sheath (4) consist of resilient metal sheets and/or **in that** the radial distance (24) between the inner sheath (2, 4) is substantially constant over the circumference, wherein the distance (24) may be increased as the longitudinal edges (12, 14) move apart from each other during spreading of the longitudinal edges (12, 14).

4. Insulating device according to any one of claims 1 to 3, **characterised in that** the cavity (20) is configured so as to be open at the at least one end face over an angle range of at least approximately 360°.

5. Insulating device according to any one of claims 1 to 4, **characterised in that** the insulating material (22) axially protrudes at at least one end face by a predeterminable distance (70) and/or **in that** a spacing element (76), which is preferably U-shaped, is provided at at least one end face between the inner sheath (2) and the outer sheath (4), a connecting arm (80) and a arm (82) comprising plates (86) separated by slots (84).

6. Insulating device according to any one of claims 1 to 5, **characterised in that** a spacing element (76) is provided at both end faces, and **in that** a further insulating device arranged next to said first insulating device also comprises at least one corresponding spacing element (76), the spacing elements (76) of the insulating devices arranged next to one another being at least approximately adjacent to one another and/or sealing means, in particular an insulated masking tape, being provided in the connection region, and/or a clamping or holding element (60) being configured in a sealing manner over the entire circumference.

7. Insulating device according to any one of claims 1 to 6, **characterised in that** an end face (72) of the insulating material (22) is adjacent to the end face (74) of the insulating material of an adjacent insulating device or is adjacent to the spacing element (76) of the adjacent insulating device.

8. Insulating device according to any one of claims 1 to 7, **characterised in that** at least one overlapping element (34, 36) is provided in the region of the mutually associated axial longitudinal edges (12, 14) associated with one another and/or **in that** the overlapping element (34, 36) is integral with the inner sheath (2) or the outer sheath (4) and/or is formed by reversed webs of the inner sheath (2) and/or the outer sheath (4).

9. Insulating device according to any one of claims 1 to 8, **characterised in that** for providing a fixed point, the insulating device comprises at least one recess (92), which is preferably configured as a substantially axially extending slot, and **in that** a pin (90) or the like, which is connected to the pipe (6), in particular to the flange (8) thereof, engages with the recess (92).

10. Insulating device according to any one of claims 1 to 9, **characterised in that** at least one spacing element (98), which is preferably configured as a toothed band and/or a segment, is arranged on the inner side of the inner sheath (2) the insulating device resting via the at least one spacing element (98) on the machine element and/or the pipe (6) and/or a flange (8) and/or on a protective pipe (96), which surrounds in particular a compensator (94).

## Revendications

1. Dispositif d'isolement pour des corps (6) pouvant être traversés par un milieu chaud, en particulier pour des éléments de machine pouvant être traversés par des gaz d'échappement tels que des tuyaux d'échappement ou des dispositifs de chargement, contenant un matériau isolant (22) associé au corps (6), une enveloppe intérieure flexible (2) et une enveloppe extérieure flexible (4) entourant celle-ci et le matériau isolant (22), le dispositif d'isolement étant conformé en unité avec des faces frontales et deux bords longitudinaux (12, 14) mutuellement associés, l'enveloppe intérieure (2) et l'enveloppe extérieure (4) étant reliées l'une à l'autre au moins au niveau d'au moins l'un des bords longitudinaux (12, 14) et le dispositif isolant pouvant être enfilé sur le corps (6) par écartement au niveau des bords longitudinaux (12, 14) se trouvant au moins approximativement l'un contre l'autre après l'enfilage,
***caractérisé***
***en ce que*** l'enveloppe intérieure (2) et l'enveloppe extérieure (4) sont reliées l'une à l'autre exclusivement au niveau dudit au moins un bord longitudinal (12, 14) au moyen de méplats (40, 42, 44), une cavité (10) étant d'abord présente entre l'enveloppe intérieure (2) et l'enveloppe extérieure (4),
***en ce que*** la cavité (20) prévue pour recevoir le matériau isolant (22) est réalisée ouverte au niveau d'au moins la première face frontale, et
***en ce que*** le matériau isolant (22) est rempli de manière remplaçable dans la cavité (20) entre l'enveloppe extérieure (4) et l'enveloppe intérieure (2).

2. Dispositif d'isolement selon la revendication 1, ***caractérisé en ce que*** l'enveloppe intérieure (2) et l'enveloppe extérieure (4) sont reliées l'une à l'autre exclusivement au niveau des deux bords longitudinaux (12, 14) et/ou ***en ce que*** les méplats (40, 42, 44) sont fabriqués par cintrage des bords longitudinaux de l'enveloppe intérieure (2) et/ou de l'enveloppe extérieure (4).

3. Dispositif d'isolement selon la revendication 1 ou 2, ***caractérisé en ce que*** l'enveloppe intérieure (2) et l'enveloppe extérieure (4) sont composées de tôles métalliques élastiques et/ou ***en ce que*** la distance radiale (24) entre les enveloppes (2, 4) sur le pourtour est sensiblement constante, la distance (24) pouvant être augmentée lors de l'écartement des bords longitudinaux (12, 14) pour une distance croissante depuis les bords longitudinaux (12, 14).

4. Dispositif d'isolement selon l'une quelconque des revendications 1 à 3, ***caractérisé en ce que*** la cavité (20) est réalisée ouverte sur ladite au moins une face frontale sur une plage angulaire d'au moins approximativement 360 degrés.

5. Dispositif d'isolement selon l'une quelconque des revendications 1 à 4, ***caractérisé en ce que*** le matériau isolant (22) forme saillie axialement sur une distance (70) prédéterminable au niveau d'au moins une face frontale et/ou ***en ce qu**'au* niveau d'au moins une face frontale, il est prévu entre l'enveloppe intérieure (2) et l'enveloppe extérieure (4) un corps d'écartement (76) qui est réalisé de préférence en U, une branche de jonction (80) et une branche (82) contenant des lamelles (86) séparées par des fentes (84).

6. Dispositif d'isolement selon l'une quelconque des revendications 1 à 5, ***caractérisé en ce que*** sur les deux faces frontales est prévu un corps d'écartement (76), et ***en ce qu'**un* autre dispositif d'isolement prévu à côté de ce premier dispositif d'isolement présente également au moins un corps d'écartement (76) correspondant, les corps d'écartement (76) des dispositifs d'isolement placés côte à côte étant au moins approximativement l'un contre l'autre dans la zone de jonction et/ou des moyens d'étanchéité étant prévus, en particulier une bande de couverture isolée, et/ou l'élément de serrage ou de maintien (60) étant réalisé hermétique sur tout le pourtour.

7. Dispositif d'isolement selon l'une quelconque des revendications 1 à 6, ***caractérisé en ce que*** le matériau isolant (22) s'appuie avec une face frontale (72) contre la face frontale (74) du matériau isolant d'un dispositif d'isolement voisin ou contre le corps d'écartement (76) du dispositif d'isolement voisin.

8. Dispositif d'isolement selon l'une quelconque des revendications 1 à 7, ***caractérisé en ce qu'**au* niveau des bords longitudinaux axiaux (12, 14) mutuellement associés, il est prévu au moins un élément de chevauchement (34, 36) et/ou ***en ce que*** l'élément de chevauchement (34, 36) est réalisé d'un seul tenant avec l'enveloppe intérieure (2) ou l'enveloppe extérieure (4) et/ou est formé par des méplats recourbés de l'enveloppe intérieure (2) et/ou de l'enveloppe extérieure (4).

9. Dispositif d'isolement selon l'une quelconque des revendications 1 à 8, ***caractérisé en ce que**,* pour créer un point fixe, le dispositif d'isolement comprend au moins un évidement (92) qui est conformé de préférence sous la forme d'un trou oblong d'extension sensiblement axiale, et ***en ce qu'**un* ergot (90) ou analogue relié au tube (6), en particulier à sa bride (8), s'engage dans l'évidement (92).

10. Dispositif d'isolement selon l'une quelconque des revendications 1 à 9, ***caractérisé en ce que*** sur la face intérieure de l'enveloppe intérieure (2) est placé au moins un élément d'écartement (98) qui est conformé de préférence en bande dentée et/ou en segment, le dispositif d'isolement s'appuyant par l'intermédiaire dudit au moins un élément d'écartement (98) sur l'élément de machine et/ou le tube (6) et/ou une bride (8) et/ou un tube de protection (6), ledit tube de protection (96) entourant en particulier un compensateur (94).
